(19) Europäisches Patentamt
European Patent Office
Office européen des brevets

(11) **EP 3 357 874 B1**

(12) **EUROPÄISCHE PATENTSCHRIFT**

(45) Veröffentlichungstag und Bekanntmachung des Hinweises auf die Patenterteilung:
**23.01.2019   Patentblatt 2019/04**

(21) Anmeldenummer: **18154233.3**

(22) Anmeldetag: **30.01.2018**

(51) Int Cl.:
**C03B 5/44** *(2006.01)*      **C03B 9/38** *(2006.01)*
**C03B 11/12** *(2006.01)*     **C03B 5/20** *(2006.01)*
**C03B 5/26** *(2006.01)*

(54) **VORRICHTUNG UND VERFAHREN ZUR KÜHLUNG EINES EINE GLASSCHMELZE BERÜHRENDEN BAUTEILS**

DEVICE AND METHOD FOR COOLING A COMPONENT IN CONTACT WITH A GLASS MELT

DISPOSITIF ET PROCÉDÉ DE REFROIDISSEMENT D'UN COMPOSANT EN CONTACT AVEC LE VERRE EN FUSION

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **01.02.2017   DE 102017201611**

(43) Veröffentlichungstag der Anmeldung:
**08.08.2018   Patentblatt 2018/32**

(73) Patentinhaber: **Schott AG**
**55122 Mainz (DE)**

(72) Erfinder:
• **HUNNIUS, Holger**
  **55122 Mainz (DE)**

• **ZINTL, Reinhard**
  **95615 Marktredwitz (DE)**
• **DÜRSCH, Ludwig**
  **55130 Mainz (DE)**

(74) Vertreter: **Mehler Achler**
**Patentanwälte Partnerschaft mbB**
**Bahnhofstraße 67**
**65185 Wiesbaden (DE)**

(56) Entgegenhaltungen:
**WO-A1-03/072515     DE-B- 1 034 823**
**US-A- 3 241 941**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

## Beschreibung

Die Erfindung betrifft ein Verfahren zur Kühlung eines eine Glasschmelze berührenden oder führenden Bauteils einer Glasschmelzanlage, die entsprechende Kühlvorrichtung sowie das System aus der Kühlvorrichtung und dem gekühlten Bauteil selbst.

Das Bauteil einer Glasschmelzanlage besteht üblicherweise aus einem oder mehreren Blöcken eines Feuerfestmaterials. Feuerfestmaterial ist dafür bekannt, dass es den hohen Temperaturen und der chemisch aggressiven Atmosphäre der Glasschmelze standhält. Gleichwohl findet auf die Dauer eine Abnutzung durch Auflösung des Feuerfestmaterials in der Glasschmelze statt, welche umso stärker ausfällt, je größer die thermische Belastung ist, der das Bauteil gleichzeitig ausgesetzt ist.

Beispielsweise sind in Schmelz- und/oder Läuterwannen Überström- und Brückenwälle bekannt, welche die Strömung bestimmter Schichten in der Glasschmelze gezielt behindern, den Glasabzug anderer Schichten begünstigen und allgemein die Verweildauer der Schmelze in der Schmelz-/Läuterwanne beeinflussen. An exponierten Stellen solcher Bauteile erhöht sich regelmäßig die Strömungsgeschwindigkeit der Glasschmelze, so dass dort auch die für Korrosion verantwortlichen Transportvorgänge beschleunigt werden. Ist ein solches Bauteil nach einer bestimmten Betriebsdauer zu stark korrodiert, kann es seine bestimmungsgemäße Funktion nicht mehr erfüllen und muss deshalb ausgetauscht werden. Überström- und Brückenwälle sind hier nur beispielhaft genannt, auch andere strömungsbeeinflussende Bauteile einschließlich des Wannenbodens oder der Wannenwände können von dem geschilderten Problem betroffen sein.

Ein Austausch solcher Bauteile ist im laufenden Betrieb einer Glasschmelzanlage selbstverständlich nicht möglich. Zunächst muss die Anlage stillgelegt werden, um dann die erforderlichen Instandsetzungsmaßnahmen durchführen zu können. Dies ist ein kostspieliges Prozedere, weshalb man bestrebt ist die Standzeiten einer solchen Glasschmelzanlage und der einzelnen Bauteile darin nach Möglichkeit zu verlängern.

Desweiteren bedeutet der Verschleiß von Feuerfestmaterial immer auch, dass Fremdpartikel in die Glasschmelze eingetragen werden und sich häufig unter der Bildung von Gasblasen in der Schmelze lösen. Diese können die Glasqualität negativ beeinflussen. Auch aus diesem Grund ist man bestrebt, die Feuerfestkorrosion zu minimieren.

Man hat festgestellt, dass die Korrosion durch Kühlung der Bauteile vermindert werden kann. So ist beispielsweise in der Schrift US 3,244,498 ein Brückenwall beschrieben, der die Schmelzzone einer Schmelzwanne von der Läuterzone der Schmelzwanne trennt, wobei er das Glas von der einen in die andere Zone durch zwei definierte Öffnungen strömen lässt. Dieser Brückenwall ist aus mehreren Blöcken aus Feuerfestmaterial aufgebaut und bildet einen von der Unterseite der Schmelzwanne zugänglichen (offenen) Hohlraum aus. In dem Hohlraum befinden sich mehrere Leitungen, durch welche Luft als Kühlmedium in den Hohlraum einströmt und den Brückenwall auf diese Weise von seiner Unterseite aktiv kühlt.

US3241941 A und DE1034823 B lehren einen im Innern gekühlten Stempel zur Formung einer Glasschmelze, einschließlich einem Rohr mit Bohrungen. WO03072515 A1 offenbart ein Bauteil in einer Glasschmelze, welches im Innern mittels eines Rohres gekühlt wird. Hiervon ausgehend ist es Aufgabe der vorliegenden Erfindung, das Verfahren zur Kühlung eines eine Glasschmelze berührenden oder führenden Bauteils, die dementsprechende Kühlvorrichtung und das System aus der Kühlvorrichtung und dem gekühlten Bauteil selbst zu verbessern, um die auf den Materialverschleiß zurückzuführenden, vorstehend geschilderten Probleme zu verringern.

Die Aufgabe wird durch ein Verfahren mit den Merkmalen des Anspruchs 1, eine Kühlvorrichtung gemäß Anspruch 7 sowie ein System gemäß Anspruch 10 gelöst.

Das Verfahren zur Kühlung eines eine Glasschmelze berührenden oder führenden Bauteils einer Glasschmelzanlage, welches mindestens einen offenen Hohlraum aufweist, sieht vor, dass ein Rohr mit einem offenen Rohrende zumindest auf einem Rohrabschnitt in den Hohlraum im Bauteil unter Ausbildung eines umfänglichen Ringraumes zwischen der Außenoberfläche des Rohres und der Innenoberfläche des Hohlraums und unter Einhaltung eines axialen Abstandes S zwischen dem Rohrende und dem Grund des Hohlraumes eingeführt wird und im Betrieb der Glasschmelzanlage ein Kühlmedium durch das Rohr in den Hohlraum eingeleitet und am Grund des Hohlraums umgelenkt wird, im Ringraum zurückströmt und aus dem Hohlraum ausströmt. Das Verfahren ist erfindungsgemäß dadurch weitergebildet, dass das Rohr in seinem in den Hohlraum eingeführten Rohrabschnitt eine Einschnürung und im Bereich der Einschnürung Durchbrüche durch die Rohrwandung aufweist, wodurch das Kühlmedium beim Passieren der Einschnürung im Rohrinnern beschleunigt und ein Teil des zurückströmenden Kühlmediums aus dem Ringraum in das Rohrinnere gesaugt wird.

Die erfindungsgemäße Kühlvorrichtung zur Kühlung eines eine Glasschmelze berührenden oder führenden Bauteils einer Glasschmelzanlage sieht demgemäß ein abschnittsweise in einen offenen Hohlraum in dem Bauteil einführbares Rohr mit einem offenen Rohrende und einen mit dem Rohr fluidisch verbundenen Strömungserzeuger zum Erzeugen eines Kühlmediumstromes vor, wobei das Rohr zumindest auf einem Rohrabschnitt in den Hohlraum im Bauteil unter Ausbildung eines umfänglichen Ringraums zwischen der Außenoberfläche des Rohres und der Innenoberfläche des Hohlraums und unter Einhaltung eines axialen Abstandes S zwischen dem Rohrende und dem Grund des Hohlraumes einführbar ist, wobei das Rohr in seinem in den Hohlraum eingeführten Rohrabschnitt eine Einschnürung und im Bereich der Einschnürung Durchbrüche durch die Rohrwandung aufweist.

Das erfindungsgemäße System ergänzt die Kühlvorrichtung durch ein eine Glasschmelze führendes Bauteil einer Glasschmelzanlage, welches mindestens einen offenen Hohlraum aufweist, wobei das Rohr der Kühlvorrichtung mit seinem in den Hohlraum einführbaren Rohrabschnitt unter Ausbildung eines umfänglichen Ringraumes zwischen der Außenoberfläche des Rohres und der Innenoberfläche des Hohlraumes und unter Einhaltung eines axialen Abstandes S zwischen dem Rohrende und dem Grund des Hohlraumes eingeführt ist.

Begriffsbestimmungen:

Als "offener Hohlraum" wird ein Hohlraum in dem Bauteil verstanden, der von wenigstens einer Seite durch eine Öffnung zugänglich ist. Die Öffnung befindet sich im Betrieb der Glasschmelzanlage selbstredend auf einer der Glasschmelze abgewandten Seite des Bauteils. Als "Einschnürung" wird ganz allgemein eine lokale Querschnittsverjüngung des Rohres bezeichnet. Diese kann sich über den gesamten Umfang oder über einen oder mehrere Teilbereiche (Winkelabschnitte) des Umfangs erstrecken. Sie kann beispielsweise durch eine Erhöhung der Wandstärke auf der Innenseite des Rohres oder eine Umformung der Rohrwandung zur Erzielung einer konkaven Bauchform (Einhalsen) gebildet sein. Der "Bereich der Einschnürung" beschreibt den gesamten Längenabschnitt des Rohres, in dem der Querschnitt gegenüber einem gleichförmigen Ausgangsquerschnitt des Rohres verjüngt ist. Davon zu unterscheiden ist der "einführbare" oder "eingeführte" Rohrabschnitt, welcher im bestimmungsgemäß eingesetzten Zustand radial von dem Bauteil umgeben ist. Als "Rohrende" wird die offene Stirnseite des einführbaren/eingeführten Rohabschnittes bezeichnet. Der Bereich der Einschnürung ist in der Regel ein Teilabschnitt des einführbaren/eingeführten Rohabschnittes, der in axialer Richtung bevorzugt an das Rohrende angrenzend oder zumindest näher am Rohrende angeordnet ist als an der Öffnung des Hohlraumes. Das "Rohr" ist nicht auf eine bestimmte Querschnittsform beschränkt, bevorzugt ist diese aber kreisrund. Dabei ist das Rohr in einfachster Ausgestaltung außer im Bereich der Einschnürung zylindrisch ausgestaltet und hat vorzugsweise auch im Bereich der Einschnürung einen überwiegend kreisrunden Querschnitt. Besonders bevorzugt weist es an der engsten Stelle der Einschnürung ebenfalls einen kreisförmigen Querschnitt auf. Ähnliches gilt für den Hohlraum, dessen Querschnitt, wie aus der Schrift US 3,244,498 bekannt, beispielsweise eckig oder bevorzugt kreisrund sein kann. In letzterem Fall ist der Hohlraum vorzugsweise als Sackloch ausgebildet. Dementsprechend ist der sich zwischen der Außenoberfläche des Rohres und der Innenoberfläche des Hohlraums ausbildende umfängliche Ringraum nicht zwingend aber bevorzugt kreisringförmig. Das Rohr ist in dem Hohlraum bevorzugt zentrisch und insbesondere das zylindrische Rohr in einem solchen Sackloch konzentrisch angeordnet, auch wenn die Erfindung eine exzentrische Anordnung nicht ausschließt.

Das eine Glasschmelze führende Bauteil ist bevorzugt aus Feuerfestmaterial gebildet. Es bildet weiterhin bevorzugt beispielsweise einen Überströmwall oder einen Brückenwall oder eine Durchflussöffnung oder einen sonstigen Wand- oder Bodenabschnitt einer Glasschmelzanlage.

Bekanntlich nimmt in einem verjüngten Bereich eines mediendurchströmten Rohres die Strömungsgeschwindigkeit zu und proportional zum Quadrat der Geschwindigkeitszunahme der stationäre Druck an der gleichen Stelle ab (Bernoulli-Gleichung). Diese physikalische Gesetzmäßigkeit wird beispielsweise in einem Venturi-Rohr oder einer Venturi-Düse zur Mischung verschiedener Medien genutzt, von denen ein erstes Medium das Rohr durchströmt und ein zweites Medium durch ein seitlich im Bereich der Verjüngung angesetztes Abnahmerohr zugeführt bzw. eingesaugt wird.

Die Erfindung macht sich dieses Prinzip nun erstmals zur verbesserten Kühlung eines eine Glasschmelze führendes Bauteils zunutze. Dabei wird dem Hohlraum nicht nur ein kühlendes Medium von außen durch ein Rohr zugeführt, sondern dieses aufgrund des Venturi-Prinzips innerhalb des Hohlraums derart umgewälzt, dass sich die Kühlleistung am Luftaustritt des Rohres, also am offenen Rohrende gegenüber einem herkömmlichen Rohr verbessert. Die Verbesserung der Kühlleistung resultiert aus der Erhöhung der Strömungsgeschwindigkeit durch die Umwälzung des Kühlmediums und der damit verbundenen Erhöhung des Konvektionskoeffizienten. Da das Rohrende bis auf den axialen Abstand S an den Grund des Hohlraumes heranreicht, ist dieser Bereich des Bauteils am besten gekühlt. In der Regel ist dies auch der Ort, der sich am nächsten an der thermisch und mechanisch meist beanspruchten Stelle des Bauteils befindet, beispielsweise die Wallkrone eines Überström- oder Brückenwalls. Die verbesserte Kühlwirkung wirkt gerade hier einer Korrosion des Materials effektiv entgegen.

Die Dimensionierung des Rohres und des Hohlraumes und der sich daraus ergebenden Wandabstände sowie die Anzahl der Hohlräume und der eingesetzten Rohrabschnitte orientiert sich einerseits an der zu entziehenden Wärmemenge und andererseits an möglichst geringen Betriebskosten der Schmelzanlage. Hinsichtlich Betriebskosten sind geringe Mengen an Kühlmittel- (Gas-/Luft-) -bedarf bei möglichst geringem Druck von Vorteil. Daher sind die Strömungsquerschnitte der erfindungsgemäßen Kühlvorrichtung bzw. des erfindungsgemäßen Systems in den Abschnitten, in denen keine Kühlung erzielt werden soll, vorzugsweise so zu wählen, dass im Betrieb ein möglichst geringer Druckverlust besteht, um die Betriebskosten niedrig zu halten. In den Strömungsabschnitten, in denen die Kühlung jedoch wirken und der Schmelzanlage bzw. deren Einbauten lokal Wärme entzogen werden soll, wird gezielt eine überhöhte Strömungsgeschwindigkeit erzeugt und höhere Druckverluste toleriert. Ein Bereich mit überhöhter Strömungsgeschwindigkeit stellt die Wandung des hier beschriebenen Hohlraums dar. Folgende Dimensionen haben sich unter diesen Gesichtspunkten für das erfindungsgemäße Verfahren, die Vorrichtung und das System als vorteilhaft herausgestellt: Vorzugsweise weist das Rohr außer im Bereich der Einschnürung eine Innenquerschnittsfläche $A_I$ und der Hohlraum eine Querschnittsfläche $A_H$ senkrecht zum Rohr, d.h. zur Rohrachse, auf, wobei $A_H$ dem 1,5-fachen bis 4-fachen von $A_I$ entspricht. Strömungsdynamisch optimal sind konstante hydraulische Durchmesser, wodurch sich für einen Hohlraum mit kreisförmigem Querschnitt und ein kreisförmiges Rohr das Verhältnis $A_H = 4 \cdot A_I$ ergibt. Eine Halbierung der Flächenverhältnisse auf $A_H = 2 \cdot A_I$ verdoppelt demgegenüber die Strömungsgeschwindigkeit an der Hohlraumwandung, was zu einem guten Kompromiss zwischen Betriebskosten der Kühlung und erreichter Kühlwirkung führt. Bis hin zu einem Flächenverhältnis von $A_H = 1,5 \cdot A_I$ lassen sich so gute Kühlwirkungen bei akzeptable Betriebsbedingungen erzielen. Diese Beziehung der Querschnittsflächen gilt unabhängig von den Querschnittsformen des Rohres und des Hohlraumes.

Ist das Rohr außer im Bereich der Einschnürung zumindest abschnittsweise zylindrisch ausgestaltet und weist es auf dem zylindrischen Abschnitt einen Innendurchmesser $D_I$ auf und ist der Hohlraum als Sackloch mit einem Durchmesser $D_H$ ausgebildet, gilt dementsprechend vorzugsweise: $D_H = \sqrt{1,5} \cdot D_I$ bis $2 \cdot D_I$ mit einem Optimum bei $D_H = \sqrt{2} \cdot D_I$.

Weiterhin bevorzugt weist das Rohr außer im Bereich der Einschnürung eine Innenquerschnittsfläche $A_I$ und an der engsten Stelle der Einschnürung eine Innenquerschnittsfläche $A_E$ auf, wobei die folgende Bedingung erfüllt ist: $A_E \geq 0,04 \cdot A_I$.

Eine minimale Querschnittsfläche des Rohres an der engsten Stelle der Einschnürung von $A_E = 0,04 \cdot A_I$ stellt sicher, dass in der Praxis der Druckverlust aufgrund der Einschnürung in einem tolerierbaren Rahmen bleibt, so dass die Kühlung noch wirtschaftlich zu betreiben ist.

Vorzugsweise weist der Hohlraum eine Querschnittsfläche $A_H$ senkrecht zur Rohrachse und einen Durchmesser $D_H = 2 \cdot \sqrt{A_H / \pi}$ auf, wobei der Abstand S dem 0,1-fachen bis 0,8-fachen des Hohlraumdurchmessers $D_H$ entspricht. Das optimale Verhältnis $S = 0,35 \cdot D_H$ ergibt sich näherungsweise aus der Forderung nach einem vorzugsweise konstanten Strömungsquerschnitt im Übergang vom Rohrende zum Spalt mit der Höhe S zwischen dem Rohrende und dem Grund des Hohlraumes und von dort in den Ringraum ($A_H = 2 \cdot A_I$), wobei an jenem Umlenkpunkt der Strömung eine Querschnittsfläche in Form der verlängerten Mantelfläche des Rohres und mit der Höhe des axialen Abstandes S angenommen wird. Aber in dem gesamten Bereich von $0,1 \cdot D_H$ bis $0,8 \cdot D_H$ lassen sich wieder gute Kühlwirkungen bei akzeptable Betriebsbedingungen erzielen.

Und auch diese Bedingung gilt generell, also unabhängig von der Querschnittsform des Hohlraumes senkrecht zur Rohrachse. $D_H$ bezeichnet also allgemein einen äquivalenten Durchmesser, wenn der Hohlraum keinen kreisrunden Querschnitt aufweist. Ist dieser kreisrund, beispielsweise weil der Hohlraum als ein Sackloch ausgebildet ist, ist $D_H$ natürlich der reale Durchmesser. Das gleiche gilt, wenn nichts anderes angegeben ist, für den Querschnitt des Rohres.

Die Kühlvorrichtung ist in vorteilhafter Weise dadurch weitergebildet, dass der Strömungserzeuger ein Gebläse ist.

Das System ist in vorteilhafter Weise dadurch weitergebildet, dass der Abstand S ≤ 35 mm, vorzugsweise S ≤ 20 mm, beträgt.

Es hat sich weiterhin als vorteilhaft herausgestellt, dass das Sackloch einen Durchmesser $D_H$ von 40 - 80 mm, besonders bevorzugt 50 - 75 mm, aufweist.

Das Rohr weist vorzugsweise an seinem in das Sackloch einführbaren Rohrabschnitt außer im Bereich der Einschnürung einen Innendurchmesser $D_I$ von 30 - 60 mm, besonders bevorzugt 40 - 50 mm, auf.

Figurenkurzbeschreibung

Weitere Vorteile und Merkmale der Erfindung werden nachfolgend anhand von Ausführungsbeispielen in den Figurenzeichnungen näher erläutert.

Es zeigen:

Figuren 1a und 1b    eine erste Ausführungsform des erfindungsgemäßen Systems in Form eines gekühlten Überströmwalls;

Figuren 2 a und 2 b    eine zweite Ausführungsform des Systems in Form eines gekühlten Brückenwalls;

Figur 3    eine Detailansicht des Systems mit einer ersten Ausführungsform des Rohres;

| Figur 4 | die gleiche Ansicht wie Figur 3 zur Erläuterung der Druckverhältnisse in dem Rohr und dem Hohlraum; |
| --- | --- |
| Figur 5 | eine Detailansicht des Systems mit einer zweiten Ausführungsform des Rohres; |
| Figur 6 | ein Querschnitt durch einen Teststein zur Ermittlung der Kühlleistung; |
| Figur 7 | ein Messdiagramm der Temperatur in Abhängigkeit vom Gebläsedurchsatz ermittelt an einer ersten Position des Teststeins gemäß Figur 6; |
| Figur 8 | ein Messdiagramm der Temperatur in Abhängigkeit vom Gebläsedurchsatz ermittelt an einer zweiten Stelle des Teststeins gemäß Figur 6 und |
| Figur 9 | ein Messdiagramm der Temperatur in Abhängigkeit vom Gebläsedurchsatz ermittelt an einer vierten Stelle des Teststeins gemäß Figur 6. |

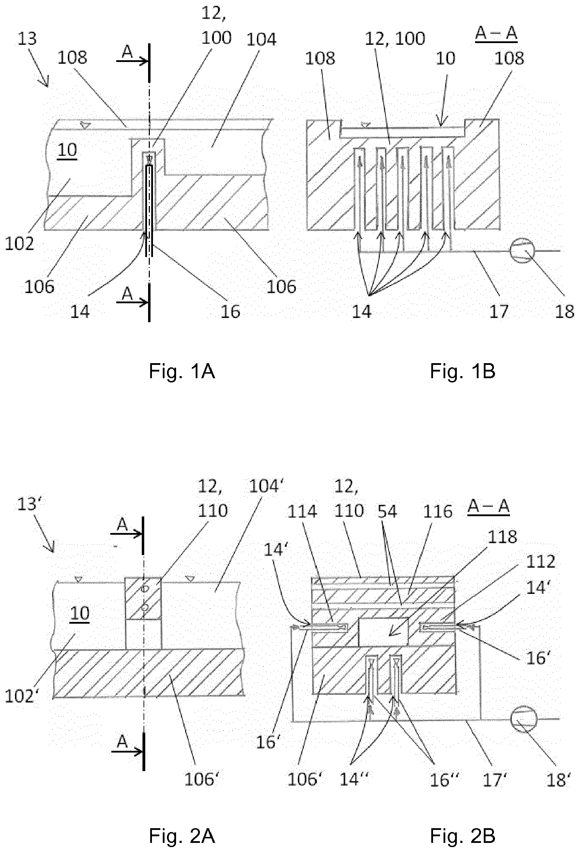

Die Figuren 1a und 1b zeigen eine erste Ausführungsform des erfindungsgemäßen Systems mit einem eine Glasschmelze 10 berührenden oder führenden Bauteil 12 in zwei Ansichten. Figur 1a zeigt eine geschnittene Seitenansicht, in der zu erkennen ist, dass das Bauteil 12 einen Überströmwall 100 bildet, der eine Schmelzwanne oder Glasschmelzanlage 13 in zwei Abschnitte 102 und 104 unterteilt. Die Schmelzwanne 13 ist von einem Wannenboden 106 und Seitenwänden 108 begrenzt, welche wie auch der Überströmwall 100 mit der Schmelze 10 in Berührung stehen und deshalb regelmäßig aus feuerfestem Stein gebildet sind. Von dem Wannenboden 106 ragt der Überströmwall 100 bis knapp unterhalb des Spiegels auf. Mit anderen Worten überdeckt die Schmelze 10 den Überströmwall auf seiner Oberseite, der sogenannten Wallkrone. An dieser Stelle weist die Schmelze die größte Strömungsgeschwindigkeit innerhalb der Schmelzwanne auf, weshalb das feuerfeste Material an der Wallkrone dem größten Verschleiß ausgesetzt ist. Deshalb ist man bestrebt, genau an dieser Stelle eine möglichst effektive Kühlung zu erzielen.

Zu diesem Zweck weist das Bauteil 12 insgesamt fünf von der der Wallkrone gegenüberliegenden Unterseite offene Hohlräume 14 auf. Wie in der geschnittenen Vorderansicht 1b zu erkennen ist, verteilen sich die Hohlräume äquidistant über die gesamte Breite des Überströmwalls 100. In jeden der Hohlräume 14 ist ein separates Rohr 16 (nur in Figur 1a beispielhaft dargestellt) eingeführt, durch welches im Betrieb der Glasschmelzanlage 13 ein Kühlmedium, insbesondere ein Gas und besonders bevorzugt Luft, in den Hohlraum 14 eingeleitet wird. Zu diesem Zweck sind alle Rohre 16 an eine Zuleitung 17 angeschlossen, welche eingangsseitig an einen Strömungserzeuger 18, bevorzugt in Form eines Gebläses, angeschlossen ist. Ferner können entlang der Zuleitung 17 nicht dargestellte Steuerelemente, wie beispielsweise ein Ventil oder Drosseln oder dergleichen, zur Steuerung des zugeführten Luftstroms vorgesehen sein.

Die Figuren 2a und 2b zeigen zwei geschnittene Ansichten einer anderen Ausführungsform des erfindungsgemäßen Systems. Das Bauteil 12 ist hier ein Brückenwall, der die Glasschmelzwanne 13' abermals in zwei Abschnitte 102' und 104' unterteilt. Der Brückenwall 110 bildet mit seinen zwei Seitenteilen 112, 114 und dem Querbalken 116 zusammen mit dem Wannenboden 106' ein Fenster 118, auch Durchflussöffnung genannt, aus, welches vollständig unter den Glasspiegel in die Schmelze 10 eingetaucht ist. Das Fenster 118 bildet eine Querschnittsverengung gegenüber dem Wannenquerschnitt, was die Strömungsgeschwindigkeit in diesem Bereich erhöht. Ein verstärkter Verschleiß des feuerfesten Materials setzt aus diesem Grund an allen vier Seiten der Fensteröffnung, d. h. an beiden Seitenteilen 112, 114, dem Querbalken 116 und dem Wannenboden 106' ein. Dementsprechend ist eine Kühlung hier in allen vier Seiten der Bauteile vorgesehen.

In den beiden Seitenteilen 112 und 114 des Brückenwalls 110 befindet sich zu diesem Zweck jeweils ein Hohlraum 14' in Form eines Sackloches, in welchen jeweils ein Rohr 16' eingeführt ist. Ganz ähnlich befinden sich in der Bodenwand 106' zwei Öffnungen 14" in Form von Sacklöchern, in die jeweils ein Rohr 16" eingeführt ist. Abermals werden die Rohre 16' und 16" über eine Leitung 17' und Strömungserzeuger 18' mit Luft versorgt.

Der Querbalken 116 weist eine andere Konstruktion der Kühlung in Form zweier durchgehender Bohrungen 54 auf, welche quer zur Wannenausrichtung von der einer zur anderen Seite mit einem Kühlmedium, vorzugsweise Luft durchströmt werden.

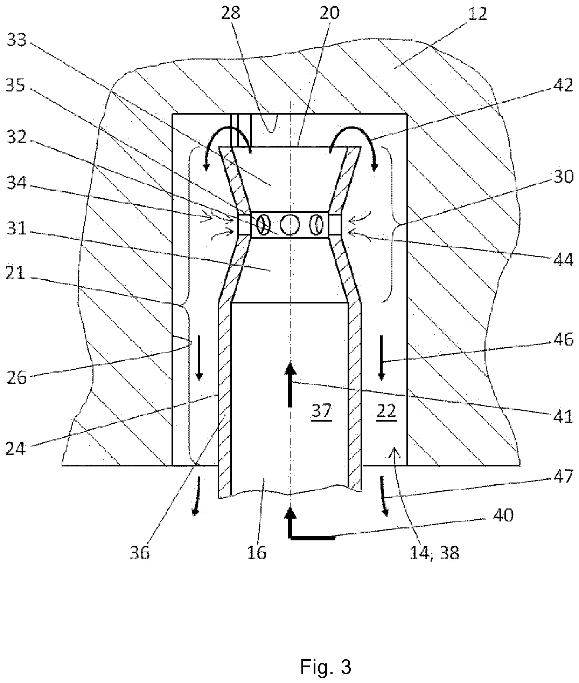

Beide im Zusammenhang mit den Figuren 1A, 1B und 2A, 2B besprochenen Ausführungsbeispiele sind in Bezug auf die Gestalt, Anzahl und Anordnung der Hohlräume bzw. Sacklöcher und Rohre als schematisch zu betrachten. Insbesondere können je nach Kühlbedarf mehr oder weniger Hohlräume und Rohre, auch in unterschiedlicher Gestalt und Größe und in anderer Anordnung vorgesehen sein. Die Details des Hohlraums 14 sowie des Rohres 16 werden nachfolgend anhand der Figuren 3 bis 5 erläutert.

Figur 3 zeigt einen Ausschnitt des erfindungsgemäßen Systems, umfassend das Bauteil 12 im Querschnitt durch einen Hohlraum 14, der als Sackloch 38 ausgestaltet ist und in den ein Rohr 16 auf einem Rohrabschnitt 21 unter Ausbildung des Ringraums 22 zwischen einer Außenoberfläche 24 des Rohres 16 und einer Innenoberfläche 26 des Hohlraums 14 eingeführt ist. Es kann sich bei dem Bauteil 12 beispielsweise um einen Überströmwall 100 gemäß den Figuren 1A, 1B, einen Brückenwall 110 oder einen Wannenboden 106' gemäß den Figuren 2A, 2B oder ein anderes Wannenbauteil handeln, welches mit Glasschmelze in Berührung steht. Die Anordnung in Figur 3 ist nur schematisch und nicht maßstäblich dargestellt. Insbesondere ist das Längen- zu-Durchmesser-Verhältnis der Sacklochbohrung und des Rohres 16 nicht maßstäblich. Regelmäßig sind das Sackloch 38 und das Rohr 16 im Verhältnis zu ihrem Durchmesser tiefer bzw. länger als es die zeichnerische Darstellung wiedergibt. Die Tiefe bzw. Länge können sehr verschieden sein. Sie hängen wiederum von der zu durchdringenden Dicke des Bauteils bzw. der Orientierung des Holraumes in diesem ab.

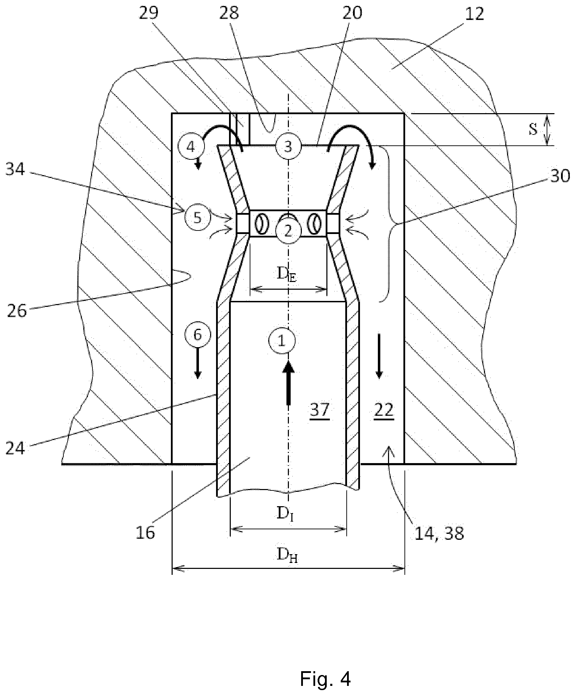

Figur 4 zeigt dieselbe Ansicht derselben Anordnung wie Figur 3, enthält nur ergänzende technische Angaben. Unter anderem ist darin ein Abstand S eingezeichnet, der zwischen dem stirnseitigen Rohrende 20 des eingeführten Rohres 16 und dem stirnseitigen Grund 28 des Hohlraumes 14 bzw. des Sackloches 38 eingehalten wird. Um auf einfache Weise zu gewährleisten, dass der Abstand mit der geforderten Präzision eingehalten wird, ist zwischen dem stirnseitigen Rohrende 20 und dem Grund 28 des Hohlraumes 14 vorzugsweise ein Abstandshalter 29 vorgesehen. Dieser ist besonders bevorzugt unverlierbar mit dem Rohr 16 verbunden.

Benachbart zu dem Rohrende 20 weist das Rohr 16 eine umfängliche Einschnürung 30 auf. Das Bezugszeichen 30 kennzeichnet den gesamten Bereich der Einschnürung 30, der durch einen sich in Strömungsrichtung verjüngenden Abschnitt 31, stromabwärts einen zylindrischen Abschnitt 32 und weiter stromabwärts einen sich in Strömungsrichtung aufweitenden Endabschnitt 33 gebildet wird. Die Richtungsangaben beziehen sich soweit auf die Strömungsrichtung des Kühlmediums innerhalb des Rohres 16. Der zylindrische Abschnitt 32 bildet bei dieser Geometrie die engste Stelle 34 der Einschnürung 30. In dem zylindrischen Abschnitt 32 weist das Rohr 16 Durchbrüche oder Bohrungen 35 durch die Rohrwandung 36 auf, die das Rohrinnere 37 mit dem Ringraum 22 fluidisch verbinden.

Im Folgenden wird die Strömung der Luft durch die Anordnung erläutert, welche in den Figuren durch Pfeile gekennzeichnet ist. Das in das Rohr 16 eingeleitete Kühlmedium (in der Regel Luft) 40 strömt in dem Rohr in axialer Richtung aufwärts, wie durch den Pfeil 41 gekennzeichnet ist. Innerhalb der Einschnürung 30 wird die Strömungsgeschwindigkeit der Luft aufgrund der Querschnittsverengung erhöht, bis sie an der engsten Stelle 34 ihr Maximum erreicht. Zugleich ist der stationäre Druck innerhalb des Rohres an dieser Stelle minimal. Bis zum Rohrende 20 hat die Luft wieder die Anfangsgeschwindigkeit erreicht, weil hier der Rohrdurchmesser dem des übrigen Rohres vor der Einschnürung 30 entspricht. Am Rohrende 20 tritt die Luft stirnseitig aus und wird von dem gegenüberliegenden Grund 28 des Sackloches 38 umgelenkt, wie die Pfeile 42 verdeutlichen sollen. Die Luft strömt im Ringraum 22 zurück und passiert zunächst einen aufgeweiteten Bereich des Ringraums 22, der mit dem Bereich der Einschnürung 30 zusammenfällt und komplementär zu dieser ausgebildet ist, weil die Rohrwandung 26 über die gesamte Länge des Rohres 16 gleich dick und der Hohlraum 14 ein zylindrisches Sackloch 38 ist. In dem aufgeweiteten Bereich des Ringraums 22 verlangsamt sich die Strömung der Luft weiter, wodurch sich der stationäre Druck in dem Ringraum erhöht, bis er an der radial engsten Stelle 34 des Rohres 16 benachbarten weitesten Stelle des Ringraumes 22 ein Maximum erreicht. Hier entsteht eine Druckdifferenz zwischen dem Rohrinneren 37 und dem Ringraum 22, welche dafür verantwortlich ist, dass ein Teil der zurückströmenden Luft aus dem Ringraum 22 durch die Durchbrüche oder Bohrungen 35 in das Rohrinnere 37 eingesaugt wird, wie die Pfeile 44 andeuten. Der so im Bereich des Rohrendes 20 verstärkt umgewälzte Luftstrom, führt zu einer Erhöhung des lokalen Wärmeübergangskoeffizienten und damit zu einer stärkeren Kühlwirkung.

Die Luft strömt im Übrigen in dem Ringraum 22 wieder zurück, was durch die Pfeile 46 symbolisiert wird, und aus dem Hohlraum am unteren Ende des Bauteils 12 heraus, wie die Pfeile 47 verdeutlichen sollen.

Anhand der Figur 4, werden im Folgenden die Druckverhältnisse innerhalb und außerhalb des Rohres qualitativ betrachtet. Da es sich bei dem Ausführungsbeispiel um den Idealfall einer rotationssymmetrischen Geometrie handelt, also ein Rohr 16 und ein Sackloch 38 mit jeweils kreisrunden Querschnitten vorliegen, lassen sich die Rechnungen unmittelbar auf die in der Figur angegebenen realen Durchmesser zurückführen. Läge keine Rotationssymmetrie vor, würden anstelle der realen Durchmesser äquivalente Durchmesser $D$ treten, welche sich aus den realen Querschnittsflächen $A$ wie $D = 2 \cdot \sqrt{A/\pi}$ berechnen lassen.

Das Rohr 16 ist außer im Bereich der Einschnürung 30 zylindrisch ausgestaltet und weist auf dem zylindrischen Abschnitt einen Innendurchmesser $D_I$ auf. Das Sackloch weist einen Durchmesser $D_H$ auf. Das als Kompromiss zwischen Kühlleistung und Druckverlust günstigste Verhältnis der Querschnitte bzw. Durchmesser wurde in einem Bereich

$D_H = \sqrt{1,5} \cdot D_I$ bis $2 \cdot D_I$ mit einem Optimum bei $D_H = \sqrt{2} \cdot D_I$ gefunden. Für den Druckverlust wäre, wie oben beschrieben, die Angleichung der hydraulischen Durchmesser des Rohres 16 und des Ringraumes 22 vorteilhaft, für den Wärmeübergang eine möglichst hohe Strömungsgeschwindigkeit im Ringspalt 22, womit jedoch hohe Vordrücke und deshalb hohe Investitions- und Betriebskosten verbunden wären. Als vorteilhaft hat sich die ungefähre Angleichung der Strömungsquerschnitte des Rohres 16 und des Ringraumes 22 herausgestellt. Für Kreisquerschnitte beschreibt dies bei Vernachlässigung der Rohrwandstärke das vorstehende Optimum.

Der Abstand $S$ zwischen dem Rohrende 20 und dem Grund 28 des Sackloches 38 beträgt vorteilhafterweise von 0,1·$D_H$ bis 0,8·$D_H$, wobei unter der Annahme $D_H = \sqrt{2} \cdot D_I$ das Optimum bei ca. $S = 0,35·D_H$ liegt. Diese Proportionen haben sich insbesondere im Hinblick auf einen möglichst geringen Druckverlust im Bereich der Strömungsumlenkung also zwischen Rohrende und Sacklochgrund als optimal erwiesen. Das Maß resultiert, wie oben ausgeführt, aus der Wahl ähnlicher Strömungsquerschnitte im Bereich der Strömungsumlenkung. Wird der Spalt oder Abstand S zu groß gewählt, wird der Wärmeübergang an der Stirnfläche schlechter, wird der Spalt zu eng gewählt steigt der Druckverlust und damit der nötige Vordruck, was die Kosten der Kühlung in die Höhe treibt.

Für die Dimensionierung der Einschnürung 30 sind folgende Überlegungen maßgeblich: Die in Figur 4 eingezeichneten, eingekreisten Punkte 1 bis 6 markieren die Stellen, an welchen die im Folgenden herangezogenen Druckwerte mit entsprechenden Indizes angenommen werden. *p1* steht also für den Druck an der Stelle 1 usw. Druckdifferenzen zwischen zwei benachbarten Punkten werden mit entsprechenden Doppelindizes angegeben. *p12* steht demnach für die Druckdifferenz zwischen Punkt 1 und Punkt 2, das heißt *p12 = p1 - p2,* usw. Liegt von 1 nach 2 ein Druckverlust vor, wird *p12* also positiv.

Damit der erfindungsgemäße Effekt überhaupt eintritt, muss nach den voranstehende Überlegungen zunächst also gelten:

$$p5 > p2.$$

Diese Relation lässt sich mittels der Druckdifferenzen auch als

$$p1\text{-}p12\text{-}p23\text{-}p34\text{-}p45 \ > \ p1\text{-}p12$$

darstellen. Äquivalent umgestellt erhält man

$$\text{-}p23\text{-}p34\text{-}p45 > 0.$$

Hierbei ist p34 der Druckverlust von 3 nach 4 aufgrund der Strömungsumlenkung. Dieser kann empirisch durch Versuche oder Strömungssimulationen ermittelt werden und wird nachfolgend auch als $\Delta pu$ bezeichnet. Es gilt demnach also

$$- p23 - p45 > \Delta pu . \qquad\qquad (1)$$

Die Druckdifferenzen *P23* und *P45* lassen sich auf Grundlage der Bernoulligleichung umrechnen in

$$p23 = p2 - p3 = \frac{\rho}{2} \cdot (v_3^2 - v_2^2) \qquad\qquad (2)$$

bzw.

$$p45 = p4 - p5 = \frac{\rho}{2} \cdot (v_5^2 - v_4^2) . \qquad\qquad (3)$$

Darin bezeichnet $v_x$ die Geschwindigkeit an der Stelle x, welche bekanntermaßen proportional zum Volumenstrom $\dot{V}$ geteilt durch den Strömungsquerschnitt $A_x$ an der entsprechenden Stelle ist: $v_x = \dot{V}/A_x$. Eingesetzt in (2) und (3) und dies wiederum eingesetzt in (1) und umgestellt ergibt

$$- \frac{1}{A_3^2} + \frac{1}{A_2^2} - \frac{1}{A_5^2} + \frac{1}{A_4^2} > \frac{2}{\dot{V}^2 \rho} \Delta pu . \qquad\qquad (4)$$

Diese Relation hat Allgemeingültigkeit für den gesamten Erfindungsgegenstand und insbesondere für alle bevorzugten Flächenverhältnisse von $A_H = 1{,}5 \cdot A_I$ bis $A_H = 4 \cdot A_I$ und erlaubt, bei gegebenem Rohrquerschnitt $A_I = A_3$, gegebenem Hohlraumquerschnitt $A_H = A_3 + A_4 + A_W$ und unter Berücksichtigung der Wandstärke $A_W$ des Rohres an jener axialen Stelle, die maximale Querschnittsfläche des Rohres an der engsten Stelle der Einschnürung $A_E = A_2$, bzw. die minimalen Querschnittsfläche des Ringraumes an der entsprechenden axialen Stelle $A_5$, zu ermitteln.

Die Relation (4) ist für beliebig kleine Werte $A_E = A_2$ stets erfüllt, was auch den theoretischen Erwartungen entspricht, nimmt mit kleiner werden dem Querschnitt $A_E$ der Bernoulli-Effekt doch stetig zu. Dem ist allerdings entgegenzuhalten, dass eine beliebig enge Einschnürung in der Praxis einen irgendwann nicht mehr tolerierbaren Druckverlust über den gesamten Strömungsweg mit sich bringt, weil die Kühlung dann nur noch mit einem sehr hohen Anfangsdruck zu betreiben und damit unwirtschaftlich wäre. Aus diesem Grund kann für praktisch relevante Druckverhältnisse eine minimale Querschnittsfläche des Rohres an der engsten Stelle der Einschnürung mit $A_E = 0{,}04 \cdot A_I$ bzw. ein entsprechendes Durchmesserverhältnis $D_E = 0{,}2 \cdot D_I$ als Untergrenze angegeben werden.

In dem Ausführungsbeispiel mit der geometrischen Bedingung $A_H = 2 \cdot A_I$ vereinfacht sich die Gleichung (4) weiter. Die Bedingung $A_H = 2 \cdot A_I$ umgeschrieben auf die Indizes 3 und 4 mit $A_I = A_1 = A_3$ und mit $A_H = A_3 + A_4$ bedeutet unter Vernachlässigung der Wandstärke des Rohres einfach $A_3 = A_4$. Dies eingesetzt in (4) und umgeschrieben auf die Indizes E und H und unter Berücksichtigung der Wandstärke $A_{WE}$ des Rohres im Bereich der engsten Einschnürung mit $A_2 = A_E$ und $A_5 = A_H - A_E - A_{WE}$ erhält man

$$\frac{1}{A_E^2} - \frac{1}{(A_H - A_E - A_{WE})^2} > \frac{2}{\dot{V}^2 \rho} \Delta pu \, . \qquad (5)$$

Für den Druckverlust aufgrund der Umlenkung am Grund des Hohlraumes hat sich bei den gegebenen geometrischen Bedingungen einschließlich einer Setztiefe $S = 0{,}35 \cdot D_H$ eine Abschätzung einer doppelten 90°-Umlenkung einer Rohrströmung als ausreichend genau erwiesen, woraus für den Term $\Delta pu$ ein Wert von 50 mbar resultiert. So kann anhand der Relation (5) in diesem Bespielfall eine Abschätzung für den Maximalquerschnitt $A_E$ an der engsten Stelle 2 angegeben werden.

Alle vorstehenden Überlegungen berücksichtigen keine dissipativen Effekte und stellen insoweit eine Näherung für die Auslegung der Einschnürung dar. Sie zeigen aber, unter welchen Randbedingungen das Grundprinzip funktioniert. Will man die Geometrie der Einschnürung optimieren, dass heißt die Effizienz weiter steigern, dann empfiehlt es sich eine Strömungssimulation durchzuführen, die die realen geometrischen Parameter und auch Oberflächeneffekte zu berücksichtigen im Stande ist.

Der Bereich der Einschnürung 30 ist bei dem in den Figuren 3 und 4 gezeigten Ausführungsbeispiel so ausgestaltet, dass der sich konisch verjüngende Bereich 31 und der sich konisch aufweitende Bereich 33 in axialer Richtung gleich lang und spiegelsymmetrisch sind. Diese Geometrie ist ebenso wenig zwingend wie ganz allgemein die Proportionen der Einschnürung, der Wandverlauf des Rohres oder beispielsweise die Anordnung der Durchbrüche. Entscheidend ist, dass die Geometrie eine Druckdifferenz $p5 > p2$ und damit den zugrunde liegenden Effekt entstehen lässt. Gleichwohl mag durch eine Variation der Detailgeometrie des Rohres und/oder des Hohlraumes innerhalb und außerhalb des eingeschnürten Bereiches 30, wie beispielsweise die der Länge des eingeschnürten Bereiches 30' und/oder die eines oder beider Steigungswinkel der Verjüngungen oder Aufweitungen, eine Optimierung von Kühlleistung und Druckverlust bewirkt werden.

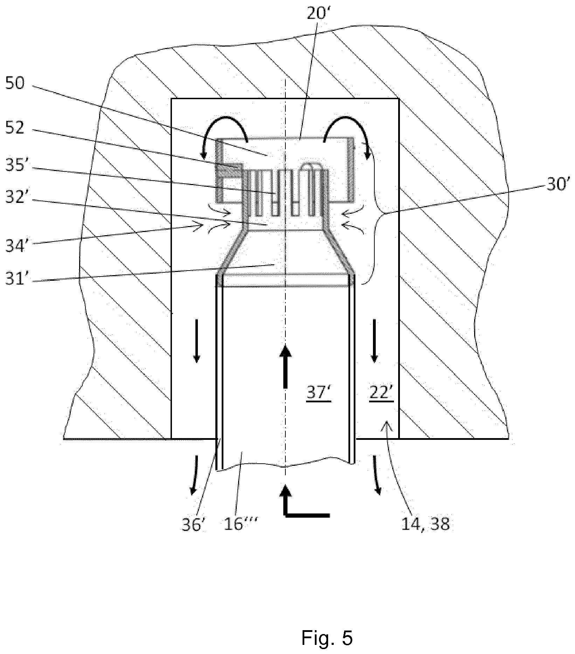

Welche Variationsbreite es für die konkrete Ausgestaltung des Rohres gibt, soll anhand der im Folgenden diskutierten Figur 5 erläutert werden. Diese zeigt eine alternative Ausführungsform des Rohres 16''', welches sich von dem Rohr 16 der unter Bezugnahme auf die Figuren 3 und 4 beschriebene Ausgestaltung durch einen veränderten Bereich der Einschnürung 30' unterscheidet. Dieser Bereich 30' weist einen sich in Strömungsrichtung verjüngenden Abschnitt 31', anschließend einen zylindrischen Abschnitt 32' und daran anschließend einen sprunghaft erweiterten zylindrischen Abschnitt 50 auf, der wieder den Anfangsquerschnitt des Rohres hat. Der zylindrische Abschnitt 32' bildet den Bereich der engsten Einschnürung 34', in dem die Strömungsgeschwindigkeit wieder maximal und der stationäre Druck minimal sind. In dem zylindrischen Abschnitt 32' sind in Strömungsrichtung orientierte schlitzförmigen Durchbrüche 35' durch die Wandung 36' des Rohres 16'''' vorgesehen. Im Übergang zu dem zylindrischen Abschnitt 50 dehnt sich das strömende Gas deshalb nicht sprungartig, sondern ähnlich gleichmäßig aus, wie in dem zuvor diskutierten Ausführungsbeispiel. Diese Schlitze sind zu diesem Zweck ferner am vorderen Ende des zylindrischen Abschnittes 32' offen.

Den Bereich der engsten Einschnürung 34' bildet funktional nur der Teil des zylindrischen Abschnittes 32', welcher nicht radial von dem weiteren zylindrischen Abschnitt 50 umgeben ist. Die Schlitze beginnen bereits in diesem Bereich der engsten Einschnürung 34' in Strömungsrichtung vor dem zylindrischen Abschnitt 50 und bilden hier zugleich die Durchbrüche 35', durch die das Kühlmedium aufgrund des stationären Druckunterschiedes wie zuvor beschrieben von dem Ringraum 22' radial in das Rohrinnere 37' einströmen kann.

Zwecks mechanischer Befestigung des weiteren zylindrischen Abschnitts 50 an dem engeren zylindrischen Abschnitt 32' sind radial dazwischenliegend umfänglich beabstandet mehrere, hier drei, Abstandselemente 52 angeordnet, die beide Abschnitte 32' und 50 miteinander verbinden.

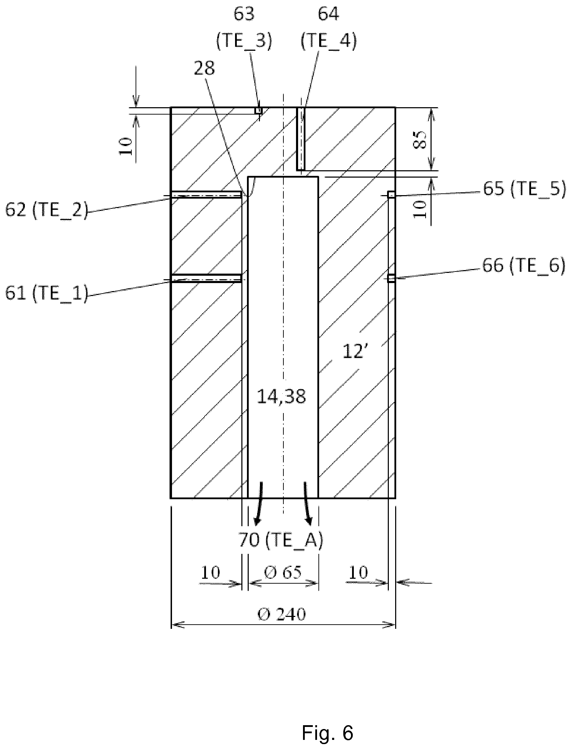

In Figur 6 ist eine Schnittdarstellung eines Teststeins 12' gezeigt, welcher eine zylindrische Form hat. Zentrisch, also mit der Zylinderachse zusammenfallend, befindet sich in dem Teststein 12' ein Hohlraum 14 in Form eines Sacklochs 38. Sowohl außenumfänglich als auch stirnseitig gegenüber dem Grund 28 des Sackloches 38 befinden sich mehrere Messbohrungen 61, 62, 63, 64, 65 und 66.

Der Teststein hat einen Außendurchmesser von 240 mm, das Sackloch 38 einen Durchmesser von 65 mm. Die Messbohrungen 61, 62 und 64 sind tiefe Bohrungen, die sich bis auf einen Abstand von jeweils 10 mm dem Sackloch 38 nähern, zwei davon radial und eine axial. Die Messbohrungen 63, 65 und 66 sind flache Bohrungen, welche jeweils nur 10 mm von der Außenseite in den Teststein hineinragen. Zwei davon sind ebenfalls radial und eine stirnseitig angeordnet. Zur praktischen Ermittlung der Kühlleistung wurden in jede der Testbohrungen 61 bis 66 jeweils ein Thermoelement zur Temperaturmessung eingeführt. Die den Testbohrungen 61 bis 66 zugeordneten Thermoelemente tragen die Bezeichnungen in gleicher Reihenfolge die Bezeichnungen TE_1, TE_2, TE_3, TE_4, TE_5 und TE_6. Ein weiteres Thermoelement TE_A wurde zur Messung der Ablufttemperatur unterhalb des Sacklochs 38 an der Position 70 angeordnet.

Ein Rohr gemäß Figur 3 wurde zu Zwecken des Testbetriebs von unten in das Sackloch 38 des Teststeins 12' eingeschoben und darin zentrisch gehalten. Die Setztiefe, also der Abstand S zwischen dem oberen Ende 20 der Rohre und dem Grund 28, war frei einstellbar und wurde während der Versuche variiert.

Das Rohr wurde an ein Gebläse angeschlossen und während der Versuche mit variierenden Volumenströmen des Kühlmediums Luft beaufschlagt.

Zu Vergleichzwecken wurde ein durchgehend zylindrisches Rohr ohne Einschnürung mit ansonsten gleicher Abmessung und Geometrie herangezogen. Dieses Rohr wird nachfolgend als Standardrohr bezeichnet. Dieses wurde in der gleichen Weise von unten in das Sackloch 38 des Teststeins 12' eingeschoben, darin zentrisch gehalten und bei den identischen Setztiefen und Volumenströmen betrieben.

Alle folgenden Diagramme beinhalten Messungen mit beiden Rohren bei jeweils drei unterschiedlichen Setztiefen, 15 mm, 25 mm und 35 mm.

Der Ofen wurde während der Versuchsdauer konstant auf 1480° C gehalten. Das Rohr wurde von einem Gebläse mit einem variablen Volumenstrom mit Kühlluft versorgt. In den im Folgenden diskutierten Diagrammen sind Messwerte bei Volumenströmen des Gebläses von 100 $m^3$/h, 150 $m^3$/h, 200 $m^3$/h und 250 $m^3$/h wiedergegeben. Die im Folgenden angegebenen Temperaturmesswerte wurden nach Erreichen eines Temperaturgleichgewichtes ermittelt.

Die Resultate aus den Messungen mit dem erfindungsgemäße Rohr gemäß der Darstellung in den Figuren 3 und 4 wird in den Legenden der im Folgenden diskutierten Diagramme als "Venturi" bezeichnet. Die Vergleichsmessungen mit dem Rohr werden in den Legenden der Diagramme als "Standard" bezeichnet. Die Setztiefen sind ebenfalls in den Legenden der Diagramme mit den Endziffern 15, 25 und 35 angegeben.

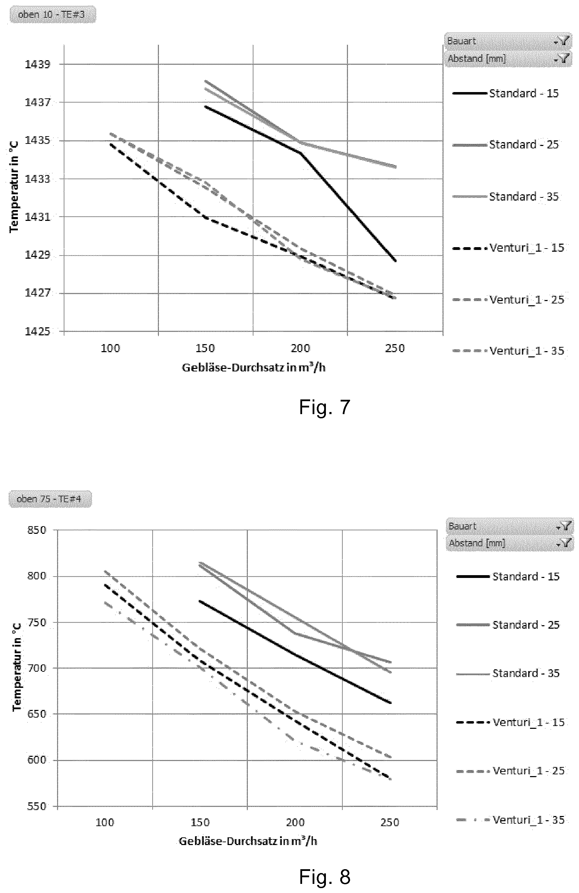

Das Diagramm gemäß Figur 7 gibt den Temperaturverlauf in °C in Abhängigkeit von dem Gebläsedurchsatz in $m^3$/h, gemessen von dem Thermoelement TE_3 in der flachen stirnseitigen Bohrung 63 des Teststeins 12' wieder. Dieser Messpunkt repräsentiert die Temperatur des Bauteils nahe der exponierten und dem größten Verschleiß ausgesetzten Stirnseite.

Aus den Kurven des Diagramms kann abgelesen werden, dass bereits mit dem Standardrohr eine jeweils mit steigendem Luftdurchsatz und sinkender Setztiefe wachsende Kühlwirkung erzielbar ist. Unabhängig von der Setztiefe und dem Gebläsedurchsatz aber ist die durch den Einsatz des erfindungsgemäßen Rohres mit umfänglicher Einschnürung gegenüber der jeweils ansonsten identischen Anordnung mit zylindrischem Standardrohr bewirkte Abkühlung der Außenoberfläche der Stirnseite des Teststeins 12' im Mittel um etwa 5° C höher. Zugleich bewirkt das Prinzip der Einschnürung, anders als eine weitere Verringerung der Setztiefe oder Erhöhung des Luftdurchsatzes, aber keinen wesentlich zusätzlichen Druckverlust und hat deshalb eine signifikant verbesserte Effizienz. Weil genau an dieser Stelle die thermische und mechanische Beanspruchung des Bauteils am Größten ist, trägt die Abkühlung punktgenau zur Erhöhung der Lebensdauer des Bauteils bei.

Das Diagramm gemäß Figur 8 gibt den Temperaturverlauf in °C in Abhängigkeit von dem Gebläsedurchsatz in $m^3$/h, gemessen von dem Thermoelement TE_4 in der tiefen stirnseitigen Bohrung 64 des Teststeins 12' wieder. Dieser Messpunkt repräsentiert die Temperatur des Bauteils nahe dem Kühlluftstrom im Steininneren. Die gemessene Temperatur unter Verwendung des Standardrohres lag gegenüber der unter Verwendung des erfindungsgemäßen Rohres abermals unabhängig von der Setztiefe und dem Gebläsedurchsatz ca. 50 bis 75 Kelvin höher. Das Diagramm in Figur 8 ist somit geeignet den Befund aus dem vorherigen Diagramm zu bestätigen, wobei die absolut höhere Temperaturdifferenz an dieser Stelle selbstverständlich darauf zurückzuführen ist, dass dieser Messpunkt nahe an dem Kühlluftstrom liegt.

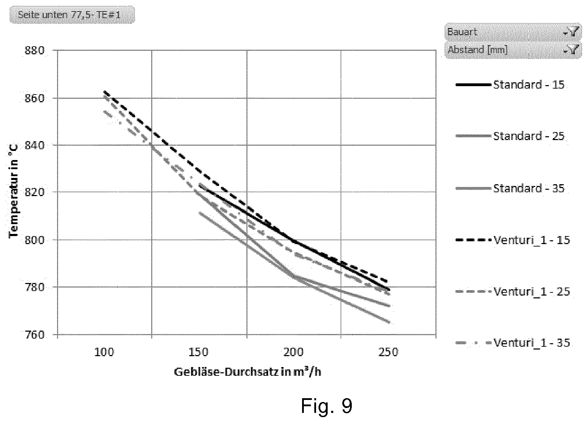

Das Diagramm in Figur 9 repräsentiert die Temperaturmessung in der tiefen Messbohrung 61 nahe der Sacklochbohrung 38 mittels Thermoelement TE_1. Die Messung zeigt, dass an dieser axial am weitesten unten gelegenen Messstelle keine signifikant verbesserte Kühlung unter Verwendung des erfindungsgemäßen Rohres erzielt werden kann. Dies bestätigt die Annahme, dass eine verstärkte Kühlung nur im Bereich des Rohrendes 20 bzw. des Sacklochgrundes 28 auftritt, weil dort unter Verwendung des erfindungsgemäßen Rohres eine verstärkte Umwälzung der Kühlluft bewirkt wird. Die Kühlung ist also nur lokal dort verstärkt, wo sie in der Praxis auch am meisten benötigt wird. Dies bestätigt besonders die Effektivität der erfindungsgemäßen Kühlung.

Auch die Temperatur der Austrittsluft am Messpunkt 70, wurde mittels Thermoelement TE_A überwacht, wodurch bestätigt werden konnte, dass unter Verwendung des erfindungsgemäßen Rohres eine verstärkte Kühlung eingetreten ist. Die Ablufttemperaturen unter Verwendung des erfindungsgemäßen Rohres liegen nämlich reproduzierbar oberhalb der Ablufttemperaturen der Standardrohre bei ansonsten gleichen Bedingungen, was auf einen größeren Wärmeentzug schließen lässt.

Aus allen Messdaten kann man ferner ablesen, dass eine kleinere Setztiefe im Hinblick auf die Kühlleistung grundsätzlich besser ist als eine größere. Dies gilt jedenfalls bis zu einem gewissen Mindestabstand, bei dem in Realität der Druckverlust des Gesamtsystems überproportional anzusteigen beginnt. Betrachtet man die Abstände der Kurven mit unterschiedlicher Setztiefe sieht man, dass bei dem vorliegenden System ($D_H$ = 65) eine Verringerung von 35 mm auf 25 mm noch eine signifikante Steigerung der Kühlleistung bewirken kann, nicht mehr aber eine Verkleinerung auf 15 mm. Ein guter Kompromiss aus Wärmeentzug und Druckverlust bildet demnach eine Setztiefe < 35 mm. Will man die Kühlleistung unter Inkaufnahme eines höheren Druckverlustes weiter erhöhen ist eine Setztiefe von < 25 mm zu bevorzugen, was dann aber unter Umständen eine Leistungserhöhung der Gebläse erforderlich machen kann. Desweiteren ist zu berücksichtigen, dass sich Toleranzabweichungen bei der Montage und Fertigung des Rohres und des Sackloches bei kleinen Setztiefen stärker bemerkbar machen.

**Bezugszeichenliste**

| | |
|---|---|
| 10 | Glasschmelze |
| 12 | Bauteil |
| 12' | Teststein |
| 13, 13' | Glasschmelzanlage |
| 14, 14', 14" | Hohlraum |
| 16, 16', 16",16'" | Rohr |
| 17, 17' | Zuleitung |
| 18, 18' | Strömungserzeuger/Gebläse |
| | |
| 20, 20' | offenes Rohrende |
| 21 | einführbarer/eingeführter Rohrabschnitt |
| 22, 22' | Ringraum |
| 24 | Außenoberfläche des Rohres |
| 26 | Innenoberfläche des Hohlraums |
| 28 | Grund des Hohlraums |
| 29 | Abstandshalter |
| 30, 30' | Einschnürung |
| 31, 31' | verjüngender Abschnitt des Rohres |
| 32, 32' | zylindrischer Abschnitt des Rohres |
| 33 | aufweitender Abschnitt des Rohres |
| 34, 34' | engste Stelle der Einschnürung |
| 35, 35' | Durchbruch |
| 36, 36' | Rohrwandung |
| 37, 37' | Rohrinneres |
| 38 | Sackloch |
| | |
| 40 | Kühlmedium |
| 41 | Strömungspfeil |
| 42 | Strömungspfeil |
| 44 | Strömungspfeil |
| 46 | Strömungspfeil |
| 47 | Strömungspfeil |
| | |
| 50 | weiter zylindrischer Abschnitt |
| 52 | Abstandselement |

54 Bohrung

61 - 66 Messbohrung
70 Temperaturmesspunkt

100 Überströmwall
102, 102' Abschnitt der Schmelzwanne
104, 104' Abschnitt der Schmelzwanne
106, 106' Wannenboden
108 Seitenwand der Schmelzwanne
110 Brückenwall
112 Seitenteil
114 Seitenteil
116 Querbalken
118 Fenster

S Setzmaß
$D_I$ Innendurchmesser des Rohres
$D_H$ Durchmesser des Sackloches
$D_E$ Durchmesser des Rohres an der engsten Stelle

TE_1 - TE_6 Thermoelement
TE_A Thermoelement

**Patentansprüche**

1. Verfahren zur Kühlung eines eine Glasschmelze (10) berührenden Bauteils (12) einer Glasschmelzanlage (13, 13'), welches mindestens einen offenen Hohlraum (14, 14', 14") aufweist,
wobei ein Rohr (16, 16', 16", 16''') mit einem offenen Rohrende (20, 20') zumindest auf einem Rohrabschnitt (21) in den Hohlraum (14, 14', 14") im Bauteil (12) unter Ausbildung eines umfänglichen Ringraumes (22, 22') zwischen der Außenoberfläche (24) des Rohres (16, 16', 16") und der Innenoberfläche (26) des Hohlraumes (14, 14', 14") und unter Einhaltung eines axialen Abstandes S zwischen dem Rohrende (20) und dem Grund (28) des Hohlraumes (14, 14', 14") eingeführt wird
und im Betrieb der Glasschmelzanlage (13, 13', 13") ein Kühlmedium durch das Rohr (16, 16', 16", 16''') in den Hohlraum (14, 14', 14") eingeleitet und am Grund (28) des Hohlraumes umgelenkt wird, im Ringraum (22, 22') zurückströmt und aus dem Hohlraum (14, 14', 14") ausströmt,
**dadurch gekennzeichnet, dass** das Rohr (16, 16', 16", 16''') in seinem in den Hohlraum (14, 14', 14") eingeführten Rohrabschnitt (21) eine Einschnürung (30, 30') und im Bereich der Einschnürung (30, 30') Durchbrüche (35, 35') durch die Rohrwandung (36) aufweist, wodurch das Kühlmedium beim Passieren der Einschnürung (30, 30') im Rohrinneren (37) beschleunigt und ein Teil des zurückströmenden Kühlmediums aus dem Ringraum (22, 22') in das Rohrinnere (37) gesaugt wird.

2. Verfahren nach Anspruch 1,
**dadurch gekennzeichnet, dass** das Rohr (16, 16', 16", 16''') außer im Bereich der Einschnürung (30) eine Innenquerschnittsfläche $A_I$ und der Hohlraum (14, 14', 14") eine Querschnittsfläche $A_H$ senkrecht zum Rohr (16, 16', 16", 16''') aufweist, wobei $A_H$ dem 1,5-fachen bis 4-fachen von $A_I$ entspricht.

3. Verfahren nach einem der vorstehenden Ansprüche,
**dadurch gekennzeichnet, dass** das Rohr (16, 16', 16", 16''') außer im Bereich der Einschnürung (30) eine Innenquerschnittsfläche $A_I$ und an der engsten Stelle (34, 34') der Einschnürung (30, 30') eine Innenquerschnittsfläche $A_E$ aufweist, wobei die folgende Bedingung erfüllt ist: $A_E \geq 0{,}04 \cdot A_I$.

4. Verfahren nach Anspruch 3,
**dadurch gekennzeichnet, dass** das Rohr (16, 16', 16", 16''') an der engsten Stelle (34, 34') der Einschnürung (30, 30') einen kreisförmigen Querschnitt mit einem Durchmesser $D_E = 2 \cdot \sqrt{A_E/\pi}$ aufweist.

5. Verfahren nach einem der vorstehenden Ansprüche,
**dadurch gekennzeichnet, dass** der Hohlraum (14, 14', 14") eine Querschnittsfläche $A_H$ senkrecht zum Rohr (16, 16', 16", 16''') und einen Durchmesser $D_H = 2 \cdot \sqrt{A_H/\pi}$ aufweist und dass der Abstand S dem 0,1-fachen bis 0,8-fachen des Hohlraumdurchmessers $D_H$ entspricht.

6. Verfahren nach einem der vorstehenden Ansprüche,
**dadurch gekennzeichnet, dass** der Hohlraum (14, 14', 14") durch ein Sackloch (38) gebildet wird, dass das Rohr (16, 16', 16", 16''') außer im Bereich der Einschnürung (30, 30') zumindest abschnittsweise zylindrisch ausgestaltet ist und auf dem zylindrischen Abschnitt einen Innendurchmesser $D_I$ aufweist, dass das Sackloch (38) einen Durchmesser $D_H$ aufweist und dass gilt: $D_H = \sqrt{1,5} \cdot D_I$ bis 2·$D_I$.

7. Kühlvorrichtung zur Kühlung eines eine Glasschmelze (10) berührenden Bauteils (12) einer Glasschmelzanlage (13, 13'), welche ein abschnittsweise in einen offenen Hohlraum (14, 14', 14") in dem Bauteil (12) einführbares Rohr (16, 16', 16", 16''') mit einem offenen Rohrende (20, 20') und
einen mit dem Rohr (16, 16', 16", 16''') fluidisch verbundenen Strömungserzeuger zum Erzeugen eines Kühlmediumstroms aufweist,
wobei das Rohr (16, 16', 16", 16''') zumindest auf einem Rohrabschnitt (21) in den Hohlraum (14, 14', 14") im Bauteil (12) unter Ausbildung eines umfänglichen Ringraumes (22, 22') zwischen der Außenoberfläche (24) des Rohres (16, 16',16", 16''') und der Innenoberfläche (26) des Hohlraumes (14, 14', 14") und unter Einhaltung eines axialen Abstandes S zwischen dem Rohrende (20, 20') und dem Grund (28) des Hohlraumes (14, 14', 14") einführbar ist,
**dadurch gekennzeichnet, dass** das Rohr (16, 16', 16", 16''') in seinem in den Hohlraum (14, 14', 14") einführbaren Rohrabschnitt (21) eine Einschnürung (30, 30') und im Bereich der Einschnürung Durchbrüche (35, 35') durch die Rohrwandung (36) aufweist.

8. Kühlvorrichtung nach Anspruch 7,
**dadurch gekennzeichnet, dass** das Kühlmedium ein Gas, insbesondere Luft, und der Strömungserzeuger ein Gebläse ist.

9. Kühlvorrichtung nach Anspruch 7 oder 8,
**dadurch gekennzeichnet, dass** der Bereich der Einschnürung (30, 30') an das Rohrende (20, 20') angrenzend angeordnet ist.

10. System bestehend aus einem eine Glasschmelze (10) berührenden Bauteil (12) einer Glasschmelzanlage (13, 13'), welches mindestens einen offenen Hohlraum (14, 14', 14") aufweist, und einer Kühlvorrichtung nach einem der Ansprüche 7 bis 9,
**dadurch gekennzeichnet, dass** das Rohr (16, 16',16", 16''') mit seinem in den Hohlraum (14, 14', 14") einführbaren Rohrabschnitt (21) unter Ausbildung eines umfänglichen Ringraumes (22, 22') zwischen der Außenoberfläche (24) des Rohres (16, 16', 16", 16''') und der Innenoberfläche (26) des Hohlraumes (14, 14', 14") und unter Einhaltung eines axialen Abstandes S zwischen dem Rohrende (20, 20') und dem Grund (28) des Hohlraumes (14, 14', 14") eingeführt ist.

11. System (12, 12', 12") nach Anspruch 10,
**dadurch gekennzeichnet, dass** das Rohr (16, 16', 16", 16''') außer im Bereich der Einschnürung (30, 30') eine Innenquerschnittsfläche $A_I$ und der Hohlraum (14, 14', 14") eine Querschnittsfläche $A_H$ senkrecht zum Rohr (16, 16', 16", 16''') aufweist, wobei $A_H$ dem 1,5-fachen bis 4-fachen von $A_I$ entspricht.

12. System (12, 12', 12") nach einem der Ansprüche 10 oder 11,
**dadurch gekennzeichnet, dass** der Hohlraum (14, 14', 14") einen Durchmesser $D_H = 2 \cdot \sqrt{A_H/\pi}$ aufweist und dass der Abstand S dem 0,1-fachen bis 0,8-fachen des Hohlraumdurchmessers $D_H$ entspricht.

13. System (12, 12', 12") nach einem der Ansprüche 10 bis 12,
**dadurch gekennzeichnet, dass** das der Abstand $S \leq 35$ mm, vorzugsweise $S \leq 25$ mm, beträgt.

**14.** System (12, 12', 12") nach einem der vorstehenden Ansprüche 10 bis 13,
**dadurch gekennzeichnet, dass** der Hohlraum (14, 14', 14") durch ein Sackloch (38) gebildet wird, dass das Rohr (16, 16', 16", 16"') außer im Bereich der Einschnürung (30, 30') zumindest abschnittsweise zylindrisch ausgestaltet ist und auf dem zylindrischen Abschnitt einen Innendurchmesser $D_I$ aufweist, dass das Sackloch (38) einen Durchmesser $D_H$ aufweist und dass gilt: $D_H = \sqrt{1{,}5} \cdot D_I$ bis $2 \cdot D_I$.

**15.** System (12, 12', 12") nach Anspruch 14,
**dadurch gekennzeichnet, dass** das Sackloch (38) einen Durchmesser $D_H$ von 40 - 80 mm aufweist.

**Claims**

**1.** Method for cooling a component (12) of a glass melting plant (13, 13'), the component being in contact with a glass melt (10) and having at least one open cavity (14, 14', 14"),
wherein a pipe (16, 16', 16", 16"') with an open pipe end (20, 20') at least on one pipe portion (21) is introduced into the cavity (14, 14', 14") in the component (12), with a peripheral annular space (22, 22') being formed between the outer surface (24) of the pipe (16, 16', 16") and the inner surface (26) of the cavity (14, 14', 14"), and with an axial distance S being maintained between the pipe end (20) and the base (28) of the cavity (14, 14', 14"),
and, during operation of the glass melting plant (13, 13', 13"), a cooling medium is conducted through the pipe (16, 16', 16", 16"') into the cavity (14, 14', 14") and is deflected at the base (28) of the cavity, flows back in the annular space (22, 22') and flows out of the cavity (14, 14', 14"),
**characterized in that** the pipe (16, 16', 16", 16"') has a constriction (30, 30') in its pipe portion (21) introduced into the cavity (14, 14', 14") and, in the region of the constriction (30, 30'), has perforations (35, 35') through the pipe wall (36), as a result of which the cooling medium is accelerated as it passes through the constriction (30, 30') in the pipe interior (37) and a portion of the cooling medium flowing back out of the annular space (22, 22') is sucked into the pipe interior (37).

**2.** Method according to Claim 1, **characterized in that**, apart from in the region in the constriction (30), the pipe (16, 16', 16", 16"') has an internal cross-sectional area $A_I$ and the cavity (14, 14', 14") has a cross-sectional area $A_H$ perpendicular to the pipe (16, 16', 16", 16"'), wherein $A_H$ corresponds to 1.5 times to 4 times $A_I$.

**3.** Method according to either of the preceding claims, **characterized in that**, apart from in the region of the constriction (30), the pipe (16, 16', 16", 16"') has an internal cross-sectional area $A_I$ and, at the narrowest point (34, 34') of the constriction (30, 30'), an internal cross-sectional area $A_E$, wherein the following condition is met: $A_E \geq 0.04 \cdot A_I$.

**4.** Method according to Claim 3, **characterized in that**, at the narrowest point (34, 34') of the constriction (30, 30'), the pipe (16, 16', 16", 16"') has a circular cross section with a diameter $D_E = 2 \cdot \sqrt{A_E / \pi}$.

**5.** Method according to one of the preceding claims,
**characterized in that** the cavity (14, 14', 14") has a cross-sectional area $A_H$ perpendicular to the pipe (16, 16', 16", 16"') and a diameter $D_H = 2 \cdot \sqrt{A_H / \pi}$, and **in that** the distance S corresponds to 0.1 times to 0.8 times the cavity diameter $D_H$.

**6.** Method according to one of the preceding claims,
**characterized in that** the cavity (14, 14', 14") is formed by a blind hole (38), **in that**, apart from in the region of the constriction (30, 30'), the pipe (16, 16', 16", 16"') is of cylindrical configuration at least in sections and has an internal diameter $D_I$ on the cylindrical portion, **in that** the blind hole (38) has a diameter $D_H$, and **in that**: $D_H = \sqrt{1.5} \cdot D_I$ to $2 \cdot D_I$.

**7.** Cooling device for cooling a component (12) of a glass melting plant (13, 13'), said component being in contact with a glass melt (10) and having a pipe (16, 16', 16", 16"') which can be introduced in sections into an open cavity (14, 14', 14") in the component (12) and has an open pipe end (20, 20'), and
a flow generator, which is fluidically connected to the pipe (16, 16', 16", 16'''), for generating a cooling medium flow, wherein the pipe (16, 16', 16", 16''') can be introduced at least on one pipe portion (21) into the cavity (14, 14', 14") in the component (12), with a peripheral annular space (22, 22') being formed between the outer surface (24) of the pipe (16, 16', 16", 16''') and the inner surface (26) of the cavity (14, 14', 14"), and with an axial distance S being maintained between the pipe end (20, 20') and the base (28) of the cavity (14, 14', 14"),
**characterized in that** the pipe (16, 16', 16", 16''') has a constriction (30, 30') in its pipe portion (21) introduced into the cavity (14, 14', 14") and, in the region of the constriction, has perforations (35, 35') through the pipe wall (36).

8. Cooling device according to Claim 7, **characterized in that** the cooling medium is a gas, in particular air, and the flow generator is a blower.

9. Cooling device according to Claim 7 or 8,
**characterized in that** the region of the constriction (30, 30') is arranged adjacent to the pipe end (20, 20').

10. System comprising a component (12) of a glass melting plant (13, 13'), said component being in contact with a glass melt (10) and having at least one open cavity (14, 14', 14"), and a cooling device according to one of Claims 7 to 9, **characterized in that** the pipe (16, 16', 16", 16''') is introduced with its pipe portion (21), which can be introduced into the cavity (14, 14', 14"), with a peripheral annular space (22, 22') being formed between the outer surface (24) of the pipe (16, 16', 16", 16''') and the inner surface (26) of the cavity (14, 14', 14") and with an axial distance S being maintained between the pipe end (20, 20') and the base (28) of the cavity (14, 14', 14").

11. System (12, 12', 12") according to Claim 10,
**characterized in that**, apart from in the region in the constriction (30, 30'), the pipe (16, 16', 16", 16''') has an internal cross-sectional area $A_I$ and the cavity (14, 14', 14") has a cross-sectional area $A_H$ perpendicular to the pipe (16, 16', 16", 16'''), wherein $A_H$ corresponds to 1.5 times to 4 times $A_I$.

12. System (12, 12', 12") according to either of Claims 10 and 11,

**characterized in that** the cavity (14, 14', 14") has a diameter $D_H = 2 \cdot \sqrt{A_H/\pi}$ and **in that** the distance S corresponds to 0.1 times to 0.8 times the cavity diameter $D_H$.

13. System (12, 12', 12") according to one of Claims 10 to 12,
**characterized in that** the distance S is $\leq$ 35 mm, preferably S is $\leq$ 25 mm.

14. System (12, 12', 12") according to one of the preceding Claims 10 to 13, **characterized in that** the cavity (14, 14', 14") is formed by a blind hole (38), **in that**, apart from in the region of the constriction (30, 30'), the pipe (16, 16', 16", 16''') is of cylindrical configuration at least in sections and has an internal diameter $D_I$ on the cylindrical portion, **in that** the blind hole (38) has a diameter $D_H$, and **in that**: $D_H = \sqrt{1.5} \cdot D_I$ to $2 \cdot D_I$.

15. System (12, 12', 12") according to Claim 14,
**characterized in that** the blind hole (38) has a diameter $D_H$ of 40 - 80 mm.

**Revendications**

1. Procédé de refroidissement d'un composant (12) en contact avec du verre en fusion (10) d'une installation de fusion de verre (13, 13'), qui présente au moins une cavité ouverte (14, 14', 14"),
dans lequel on introduit un tube (16, 16', 16", 16''') avec une extrémité de tube ouverte (20, 20') au moins sur une partie de tube (21) dans la cavité (14, 14', 14") dans le composant (12) avec formation d'une chambre annulaire périphérique (22, 22') entre la surface extérieure (24) du tube (16, 16', 16") et la surface intérieure (26) de la cavité (14, 14', 14") et dans le respect d'une distance axiale S entre l'extrémité de tube (20) et le fond (28) de la cavité (14, 14', 14") et
pendant le fonctionnement de l'installation de fusion de verre (13, 13', 13") on introduit un milieu de refroidissement à travers le tube (16, 16', 16", 16''') dans la cavité (14, 14', 14") et on le dévie au fond (28) de la cavité, on le renvoie dans la chambre annulaire (22, 22') et on l'évacue hors de la cavité (14, 14', 14"),

**caractérisé en ce que** le tube (16, 16', 16", 16"') présente dans sa partie de tube (21) introduite dans la cavité (14, 14', 14") un étranglement (30, 30') et dans la région de l'étranglement (30, 30') des percées (35, 35') à travers la paroi de tube (36), le milieu de refroidissement étant de ce fait accéléré lors de son passage dans l'étranglement (30, 30') dans l'intérieur du tube (37) et une partie du milieu de refroidissement renvoyé étant aspirée hors de la chambre annulaire (22, 22') dans l'intérieur du tube (37).

2. Procédé selon la revendication 1, **caractérisé en ce que** le tube (16, 16', 16", 16"') présente, sauf dans la région de l'étranglement (30), une aire de section transversale intérieure $A_I$, et la cavité (14, 14', 14") présente une aire de section transversale $A_H$ perpendiculairement au tube (16, 16', 16", 16"'), dans lequel $A_H$ correspond à 1,5 fois à 4 fois $A_I$.

3. Procédé selon l'une quelconque des revendications précédentes, **caractérisé en ce que** le tube (16, 16', 16", 16"') présente, sauf dans la région de l'étranglement (30), une aire de section transversale intérieure $A_I$ et à l'endroit le plus étroit (34, 34') de l'étranglement (30, 30') une aire de section transversale intérieure $A_E$, dans lequel la condition suivante est remplie:

$$A_E \geq 0{,}04 \cdot A_I \quad .$$

4. Procédé selon la revendication 3, **caractérisé en ce que** le tube (16, 16', 16", 16"') présente à l'endroit le plus étroit (34, 34') de l'étranglement (30, 30') une section transversale circulaire avec un diamètre $D_E = 2 \cdot \sqrt{A_E/\pi}$ .

5. Procédé selon l'une quelconque des revendications précédentes, **caractérisé en ce que** la cavité (14, 14', 14") présente une aire de section transversale $A_H$ perpendiculairement au tube (16, 16', 16", 16"') et un diamètre $D_H = 2 \cdot \sqrt{A_H/\pi}$ et **en ce que** la distance S correspond à 0,1 fois à 0,8 fois le diamètre de la cavité $D_H$.

6. Procédé selon l'une quelconque des revendications précédentes, **caractérisé en ce que** la cavité (14, 14', 14") est formée par un trou borgne (38), **en ce que** le tube (16, 16', 16", 16"') est, sauf dans la région de l'étranglement (30, 30'), de forme au moins localement cylindrique et présente sur la partie cylindrique un diamètre intérieur $D_I$, **en ce que** le trou borgne (38) présente un diamètre $D_H$ et **en ce que** $D_H = \sqrt{1{,}5} \cdot D_I$ à $2 \cdot D_I$.

7. Dispositif de refroidissement pour le refroidissement d'un composant (12) en contact avec du verre en fusion (10) d'une installation de fusion de verre (13, 13'), qui présente un tube (16, 16', 16", 16"') avec une extrémité de tube ouverte (20, 20') pouvant être introduit dans une cavité ouverte (14, 14', 14") dans le composant (12), et un générateur d'écoulement fluidiquement relié au tube (16, 16', 16", 16"') pour produire un courant de milieu de refroidissement, dans lequel le tube (16, 16', 16", 16"') peut être introduit au moins sur une partie de tube (21) dans la cavité (14, 14', 14") dans le composant (12) avec formation d'une chambre annulaire périphérique (22, 22') entre la surface extérieure (24) du tube (16, 16', 16", 16"') et la surface intérieure (26) de la cavité (14, 14', 14") et dans le respect d'une distance axiale S entre l'extrémité de tube (20, 20') et le fond (28) de la cavité (14, 14', 14"), **caractérisé en ce que** le tube (16, 16', 16", 16"') présente dans sa partie de tube (21) pouvant être introduite dans la cavité (14, 14', 14") un étranglement (30, 30') et dans la région de l'étranglement des percées (35, 35') à travers la paroi du tube (36).

8. Dispositif de refroidissement selon la revendication 7, **caractérisé en ce que** le milieu de refroidissement est un gaz, en particulier l'air, et le générateur d'écoulement est un ventilateur.

9. Dispositif de refroidissement selon la revendication 7 ou 8, **caractérisé en ce que** la région de l'étranglement (30, 30') est adjacente à l'extrémité de tube (20, 20').

10. Système se composant d'un composant (12) en contact avec du verre en fusion (10) d'une installation de fusion de verre (13, 13'), qui présente au moins une cavité ouverte (14, 14', 14"), et d'un dispositif de refroidissement selon l'une quelconque des revendications 7 à 9,
**caractérisé en ce que** le tube (16, 16', 16", 16''') est introduit avec sa partie de tube (21) pouvant être introduite dans la cavité (14, 14', 14") avec formation d'une chambre annulaire périphérique (22, 22') entre la surface extérieure (24) du tube (16, 16', 16", 16''') et la surface intérieure (26) de la cavité (14, 14', 14") et dans le respect d'une distance axiale S entre l'extrémité de tube (20, 20') et le fond (28) de la cavité (14, 14', 14").

**11.** Système (12, 12', 12") selon la revendication 10,
**caractérisé en ce que** le tube (16, 16', 16", 16''') présente, sauf dans la région de l'étranglement (30, 30'), une aire de section transversale intérieure $A_I$, et la cavité (14, 14', 14") présente une aire de section transversale $A_H$ perpendiculairement au tube (16, 16', 16", 16'''), dans lequel $A_H$ correspond à 1,5 fois à 4 fois $A_I$.

**12.** Système (12, 12', 12") selon une des revendications 10 ou 11, **caractérisé en ce que** la cavité (14, 14', 14") présente un diamètre $D_H = 2 \cdot \sqrt{A_H / \pi}$ et **en ce que** la distance S correspond à 0,1 fois à 0,8 fois le diamètre de la cavité $D_H$.

**13.** Système (12, 12', 12") selon l'une quelconque des revendications 10 à 12, **caractérisé en ce que** la distance S vaut S ≤ 35 mm, de préférence S ≤ 25 mm.

**14.** Système (12, 12', 12") selon l'une quelconque des revendications 10 à 13, **caractérisé en ce que** la cavité (14, 14', 14") est formée par un trou borgne (38), **en ce que** le tube (16, 16', 16", 16''') est, sauf dans la région de l'étranglement (30, 30'), de forme au moins localement cylindrique et présente sur la partie cylindrique un diamètre intérieur $D_I$, **en ce que** le trou borgne (38) présente un diamètre $D_H$ et **en ce que** $D_H = \sqrt{1,5} \cdot D_I$ à $2 \cdot D_I$.

**15.** Système (12, 12', 12") selon la revendication 14,
**caractérisé en ce que** le trou borgne (38) présente un diamètre $D_H$ de 40 - 80 mm.

Fig. 1A                    Fig. 1B

Fig. 2A                    Fig. 2B

EP 3 357 874 B1

Fig. 3

18

Fig. 4

Fig. 5

Fig. 6

Fig. 7

Fig. 8

Fig. 9

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 3244498 A
- US 3241941 A
- DE 1034823 B
- WO 03072515 A1